# EUROPEAN PATENT APPLICATION

(11) **EP 4 556 849 A1**
(43) Date of publication of application: **21.05.2025**
(21) Application number: 23210549.4
(22) Date of filing: 17.11.2023
(51) Int. Cl.: G01C 15/00, G01S 17/66

(54) **METHOD FOR AIMING A SURVEYING INSTRUMENT TO A POINT OF INTEREST**

(71) Applicant: Hilti Aktiengesellschaft, 9494 Schaan (LI)
(72) Inventor: Cieslak, Rafal, 6800 Feldkirch (AT); Winter, Andreas, 6800 Feldkirch (AT); Gogolla, Torsten, 9494 Schaan (LI); Bellusci, Giovanni, 9470 Buchs (CH)
(74) Representative: Hilti Aktiengesellschaft Corporate Intellectual Property

(57) **Abstract**

Computer-implemented method for aiming a surveying instrument to a point of interest in a worksite, in which the surveying instrument is deployed, comprising the steps: Instructing the aiming camera to capture a first image of the worksite, instructing the display unit to display the first image, waiting for a selection of the point of interest in the first image, upon selection of the point of interest, instructing the aiming camera to perform an auto-focusing algorithm, preferably for an area of interest including the point of interest, determining a distance value from the auto-focusing algorithm, computing first angle data in the first plane and/or second angle data in the second plane based on the determined distance value and on the position of the point of interest on an image sensor of the aiming camera, and instructing the drive system to rotate the support about the first angle data and/or the measuring head about the second angle data.

## Description

The present invention relates to a computer-implemented method for aiming a surveying instrument to a point of interest in a worksite according to the definition of claim 1, to a computer program according to the definition of claim 8, and to an apparatus according to the definition of claim 9.

### Background of the invention

In surveying instruments, the use of a camera may provide for improved user convenience and new functions. Particularly, a view such as an image or a video feed provided by the camera and shown on a display of the surveying instrument may be used for assisting target selection, target tracking and for providing the operator with an overview of potential points of interest.

For a surveying instrument, in which the camera center and the instrument center are eccentric, the center of the image captured by the camera does not coincide with the point which is measured by the distance measurement capabilities of the surveying instrument. In order to correctly draw a virtual indicator, such as a crosshair, in the displayed camera image at the correct measurement position, the target distance should be considered. For a hypothetical target distance equal to infinity, the eccentricity of the camera can be ignored, and the virtual crosshair can be drawn at the principal point of the camera, typically at the center of the camera image. However, as the target distance decreases, the correct position of the virtual crosshair moves further and further away from the principal point due to the camera eccentricity.

From US 7,930,835 B2, a method for aiming a surveying instrument to a point of interest in a worksite, in which the surveying instrument is deployed, is known; also known are a computer program to carry out the method for aiming a surveying instrument and an apparatus comprising means for carrying out the method for aiming a surveying instrument. The surveying instrument comprises a base, a support being rotatable with respect to the base about a first axis of rotation, a measuring head being rotatable with respect to the support about a second axis of rotation, a drive system configured to rotate the support about the first axis of rotation and/or the measuring head about the second axis of rotation, a first angle encoder configured to determine a first angle in a first plane with respect to a rotation of the support about the first axis of rotation, a second angle encoder configured to determine a second angle in a second plane with respect to a rotation of the measuring head about the second axis of rotation, a computer device or system having evaluation, data processing and/or control functionality, and a display unit configured to show an image captured by a camera. The measuring head includes a distance measuring device configured to emit a distance measuring beam defining a targeting axis and a camera having a field of view, a camera axis arranged with an offset to the targeting axis, and a camera center.

The method for aiming a surveying instrument to a point of interest comprises the steps:
▪ Instructing the camera to capture an image of the worksite,
▪ Instructing the display unit to display the image,
▪ Waiting for a selection of the point of interest in the displayed image,
▪ Upon selection of the point of interest, computing first angle data in the first plane and/or second angle data in the second plane based on a distance value and on the position of the point of interest on an image sensor of the camera,
▪ Instructing the drive system to rotate the support about the first angle data and/or the measuring head about the second angle data,
▪ Instructing the distance measuring device to measure a corrected distance value to the point of interest,
▪ Computing corrected first angle data in the first plane and/or corrected second angle data in the second plane based on the corrected distance value and on the position of the point of interest on the image sensor of the camera, and
▪ Instructing the drive system to rotate the support about the corrected first angle data and/or the measuring head about the corrected second angle data.

In order to compensate the offset between the targeting axis and the camera axis due to the eccentricity of the camera, first angle data in the first plane and/or second angle data in the second plane are computed at least twice. Precise distance data can only be measured via the distance measuring device when the offset between the targeting axis and the camera axis is fully compensated.

### Summary of the invention

Therefore, what is desired is a method for aiming a surveying instrument to a point of interest that allows to compensate the offset between the targeting axis and the camera axis in one step.

These objectives are achieved by realizing the features of the independent claims. Features which further develop the invention in an advantageous manner are described in the dependent claims.

According to an aspect of the present invention, there is provided a computer-implemented method for aiming a surveying instrument to a point of interest in a worksite, in which the surveying instrument is deployed, the surveying instrument comprising a base, a support being rotatable with respect to the base about a first axis of rotation, a measuring head being rotatable with respect to the support about a second axis of rotation, a drive system configured to rotate the support about the first axis of rotation and/or the measuring head about the second axis of rotation, a first angle encoder configured to determine a first angle in a first plane with respect to a rotation of the support about the first axis of rotation, a second angle encoder configured to determine a second angle in a second plane with respect to a rotation of the measuring head about the second axis of rotation, a computer system having evaluation, data processing and/or control functionality, and a display unit configured to display an image captured by a camera, wherein the measuring head includes a distance measuring device configured to emit a distance measuring beam defining a targeting axis, and an aiming camera having a first field of view, a first camera axis arranged with a first offset to the targeting axis, and a first camera center. The method is performed by the computer system and comprises the steps:
▪ Instructing the aiming camera to capture a first image of the worksite,
▪ Instructing the display unit to display the first image,
▪ Waiting for a selection of the point of interest in the first image,
▪ Upon selection of the point of interest, instructing the aiming camera to perform an auto-focusing algorithm, preferably for an area of interest including the point of interest,
▪ Determining a distance value from the auto-focusing algorithm,
▪ Computing first angle data in the first plane and/or second angle data in the second plane based on the determined distance value and on the position of the point of interest on an image sensor of the aiming camera, and
▪ Instructing the drive system to rotate the support about the first angle data and/or the measuring head about the second angle data.

The method is characterized in that the aiming camera is instructed by the computer system to perform an auto-focusing algorithm, preferably for an area of interest including the point of interest, and the distance value from the surveying instrument to the point of interest is determined from the auto-focusing algorithm. The aiming camera will vary the focus position of the image and analyze a predefined area of the image, such as the center area. The contrast of the images can be calculated and the position having the highest contrast is used to determine the distance. By determining the distance value from the auto-focusing algorithm, the distance is determined to the point of interest, and not to a point offset from the selected point of interest. The correction is computed by the computer system via trigonometric based on the distance value and on the position of the point of interest on the pixelated image sensor of the aiming camera. If the first offset has a component in the first plane and/or second plane, first angle data and/or second angle data are computed. To compensate the effect of eccentricity, the drive system is instructed to rotate the support about the first angle data and/or the measuring head about the second angle data.

Preferably, the method further comprises that upon rotating the support about the first angle data and/or the measuring head about the second angle data, the distance measuring device is instructed by the computer system to measure an updated distance value. The calculation of the correction can be repeated by the computer system.

In a first preferred embodiment, the first camera axis is arranged parallel to the targeting axis. By using an optical system for the surveying instrument having parallel targeting and camera axes, the optical paths of the distance measuring device and the aiming camera are separated and can be individually adapted to the specific requirements of the distance measuring device and the aiming camera.

In a second preferred embodiment, the first camera axis is inclined to the targeting axis at a first inclination angle different from 0°, and the first offset is defined as normal spacing of the targeting axis running through the first camera center. By using an inclined first camera axis the effort to compensate the first offset can be reduced. The first inclination angle is different from 0° and typically in the range of less than 1°. The first inclination angle is selected such that for a target distance equal to infinity the offset distance is zero and decreases with increasing distance between the surveying instrument and the target plane.

Preferably, the measuring head further comprises an aiming light source configured to emit aiming light. The aiming light source can support the process to identify the point of interest in all ambient lighting conditions, even in darkness. Preferably, the aiming light source is adapted to the aiming camera, such as a white light source for an aiming camera operating in the visible spectrum. Light sources emitting wavelengths of approximately 380 to 750 nm are considered to operate in the visible spectrum, and light sources emitting wavelengths of approximately 780 nm to 1 mm are considered to operate in the infrared spectrum.

Preferably, the measuring head further includes a second camera having a second field of view, a second camera axis arranged with a second offset to the targeting axis, and a second camera center. The second camera can be a tracking camera that is working in the infrared spectrum, or the second camera can be an overview camera that is working in the visible spectrum. Wavelengths of approximately 380 to 750 nm are considered to operate in the visible spectrum, and wavelengths of approximately 780 nm to 1 mm are considered to operate in the infrared spectrum.

Preferably, measuring head further includes a second light source configured to emit second light. The second light source is adapted to the second camera, such as an infrared light source for a tracking camera or a white light source for an overview camera.

According to a further aspect of the present invention, there is provided a computer program comprising instructions, which, when executed by a computer device or system, cause the computer device or system to carry out the method according to the present invention.

The computer program may be stored on the computer system or on a computer-readable medium communicatively connected to the computer system. The term "computer-readable medium" includes, but is not limited to, portable or non-portable storage devices, optical storage devices, and various other mediums capable of storing, containing, or carrying instruction(s) and/or data.

According to a further aspect of the present invention, there is provided an apparatus comprising means for carrying out the method according to the present invention.

### Brief Description of the drawings

The aspects of the invention are described or explained in more detail below, purely by way of example, with reference to working examples shown schematically in the drawing. Identical elements are labelled with the same reference numerals in the figures. The described embodiments are generally not shown true in scale, and they are also not to be interpreted as limiting the invention. Specifically,
- FIG. 1: shows an operator using a surveying instrument deployed at a worksite, the surveying instrument comprising a measuring unit mounted on a tripod and a remote controller connected via a communication link to the measuring unit,
- FIGS. 2A, B: show an exemplary version of the measuring unit used in the surveying instrument of FIG. 1 (FIG. 2A) and a block diagram of the main components of the surveying instrument (FIG. 2B),
- FIG. 3: shows the optical components of the measuring unit used in the surveying instrument of FIG. 1 in an exemplary version,
- FIG. 4: shows an exemplary version of a method for aiming a surveying instrument according to the present invention in a flow chart, and
- FIG. 5: shows schematically an image captured by the aiming camera.

### Detailed Description

Reference will now be made in detail to the present preferred embodiment, an example of which is illustrated in the accompanying drawings. It is to be understood that the technology disclosed herein is not limited in its application to the details of construction and the arrangement of components set forth in the following description or illustrated in the drawings. The technology disclosed herein is capable of other embodiments and of being practiced or of being carried out in various ways.

Also, it is to be understood that the phraseology and terminology used herein is for the purpose of description and should not be regarded as limiting. All definitions, as defined and used herein, should be understood to control over dictionary definitions, definitions in documents incorporated by reference, and/or ordinary meanings of the defined terms.

The use of "including, or "comprising, or "having" and variations thereof herein is meant to encompass the items listed thereafter and equivalents thereof as well as additional items. Unless limited otherwise, the terms "connected", "coupled", and "mounted", and variations thereof herein are used broadly and encompass direct and indirect connections, couplings, and mountings. In addition, the terms "connected" and "coupled", and variations thereof are not restricted to physical or mechanical connections or couplings.

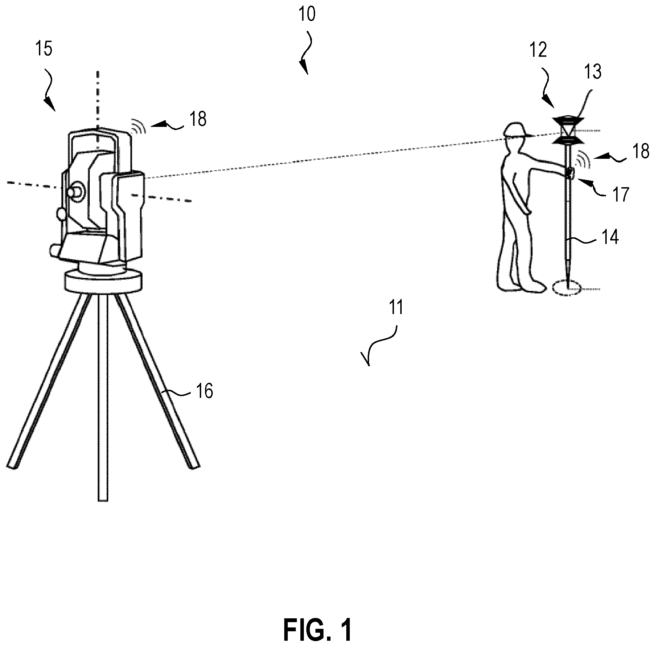

**FIG. 1** shows an operator using a surveying instrument **10** deployed at a worksite **11**. The worksite 11 may be a construction site, inside or outside, or a surveying site, amongst others. In addition to the surveying instrument 10, a target **12** that is remote from the surveying instrument 10 can be deployed at the worksite 11. The target 12 can include a reflector **13**, such as a prism and/or a cat-eye, that is mounted on top of a pole **14**.

The surveying instrument 10 is formed as a total station and comprises a measuring unit **15** that is mounted on a mounting support structure in the form of a tripod **16**. The surveying instrument 10 also comprises a removable control panel in the form of a remote controller **17** that can be used for remote control of the measuring unit 15 via a wireless connection **18**.

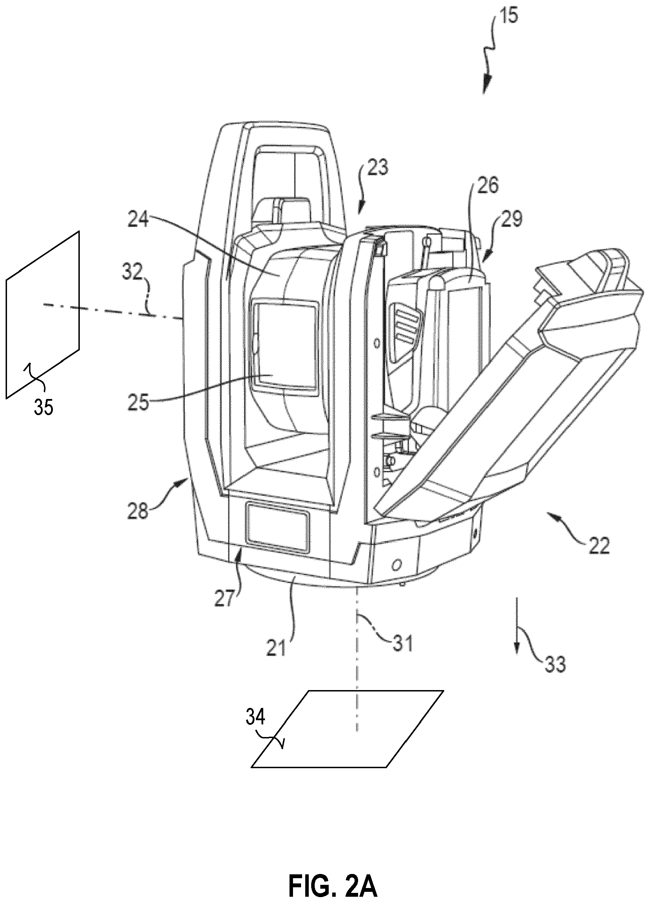

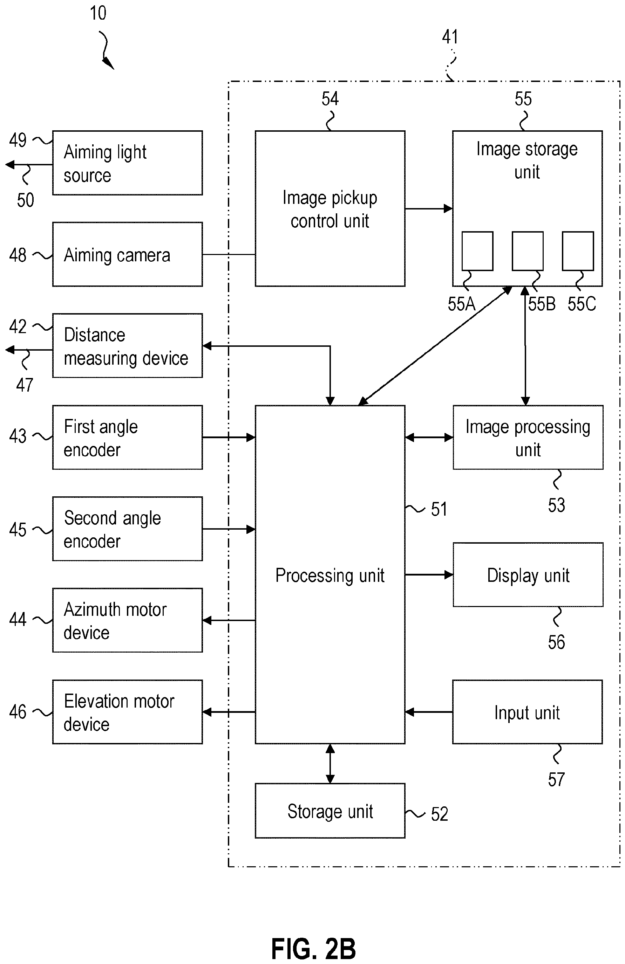

**FIGS. 2A****, B** show an exemplary version of the measuring unit 15 used in the surveying instrument 10 of FIG. 1 in a perspective view (FIG. 2A) and a block diagram of the main components of the surveying instrument 10 (FIG. 2B).

The surveying instrument 10 is designed as robotic total station and the measuring unit 15 comprises a base **21**, a support **22**, and a measuring head **23**. The measuring head 23 is enclosed by a housing **24**, which includes an exit window **25**. In the housing 24, a distance measuring device that can emit a distance measuring beam and a tracking device that can emit tracking light are arranged. The distance measuring beam and the tracking light are emitted through the exit window 25 to leave the housing 24.

In the exemplary version of FIG. 2A, the support 22 is U-formed and includes a bottom portion **27**, a first side portion **28**, and a second side portion **29**. The support 22 can rotate completely around its circumference at a full 360° angle with respect to the base 21 about a first axis of rotation **31**. The measuring head 23 is pivotably mounted to the support 22 about a second axis of rotation **32** and is arranged between the first side portion 28 and the second side portion 29 of the support. Usually, the first axis of rotation 31 is aligned parallel to a local direction of gravitation **33**, and the second axis of rotation 32 is aligned perpendicular to the local direction of gravitation 33.

An azimuth motor device and a first angle encoder may be located in the bottom portion 27 of the support 22 and allow to rotate the measuring unit 15 about the first axis of rotation 31 and to determine the direction of the distance measuring beam in a first plane **34** perpendicular to the first axis of rotation 31. An elevation motor device and a second angle encoder may be located in the first side portion 28 of the support 22 and allow the measuring head 23 to pivot about the second axis of rotation 32 and to determine the direction of the distance measuring beam in a second plane **35** perpendicular to the second axis of rotation 32. To make the instrument 12 fully automatic, a self-leveling device, which may be arranged in the bottom portion 27 of the support 22, can be included.

FIG. 2B shows a block diagram of the main components of the total station 10. The total station 10 includes a control device **41**, a distance measuring device **42**, a first angle encoder **43**, an azimuth motor device **44**, a second angle encoder **45**, and an elevation motor device **46**. The main components 41, 42, 43, 44, 45, and 46 are mandatory for a robotic total station, whereas a manual total station does not include the azimuth motor device 44 and the elevation motor device 46. The azimuth motor device 44 and the elevation motor device 46 are summarized as drive system of the measuring unit 15.

The distance measuring device 42 may include a laser transmitter, a laser driver circuit, a photosensor, and a laser receiver interface circuit. The laser driver circuit provides current for the laser transmitter which emits a distance measuring beam **47**. The photosensor receives at least a part of the distance measuring beam 47 reflected at a target or a surface of the worksite, and the current signal that is outputted by the photosensor is directed to the laser receiver interface circuit. After appropriate amplification and demodulation, the signal is sent via to the control device 41.

The first angle encoder 43 provides signals to the control device 41, so that it knows exactly in which first angle the distance measuring beam 47 is arranged in the first plane 34, and the second angle encoder 45 provides signals to the control device 41, so that it knows exactly in which second angle the distance measuring beam 47 is arranged in the second plane 35.

Angle encoders that can provide the required accuracies for the total station 10 are magnetic encoders or optical encoders. Optical encoders use a transmissive scale disc made out of glass or plastic with an LED illumination on one side of the scale and an image or line sensor on the other side of the scale; the scale has a code to provide absolute readings on any angle. US 7,589,313 B2 describes a possible encoder technology that can be used for the first and second angle encoders.

The azimuth motor device 44 may include an azimuth motor, which is the motive force to rotate the main housing 22 of the measuring unit 15 about the first axis of rotation 31, and an azimuth motor driver circuit, which will provide the proper current and voltage to drive the azimuth motor. The elevation motor device 46 may include an elevation motor, which is the motive force to pivot the measuring head 23 about the second axis of rotation 32, and an elevation motor driver circuit, which will provide the proper current and voltage to drive the elevation motor.

In order to aim the total station 10 to a point of interest POI, the total station 10 includes an aiming camera **48** and optionally an aiming light source **49** that emits aiming light **50**. The aiming camera 48 may be a visual camera that enables the user to aim the point of interest. The camera needs high resolution to see details of the target, full RGB color space and a decent field of view that enables the user to see an entire target at shortest aiming distance and longest aiming distance. If the field of view of the aiming camera 48 is not sufficient to see an entire target in shortest aiming distance a second camera can be used. In order to be able to use the total station 10 for aiming to a point of interest in all ambient lighting conditions, even in darkness, the aiming light source 49 is used to produce the necessary illumination for the aiming camera 48.

The control device 41 primarily comprises a processing unit **51**, a storage unit **52**, an image processing unit **53**, an image pickup control unit **54**, an image storage unit **55**, a display unit **56**, and an input unit **57**. The processing unit 51, the image processing unit 53, and the image pickup control unit 54 define a computer system having evaluation, data processing and/or control functionality for the surveying instrument 10.

In the storage unit 52, there may be a program storage area for different types of computer programs and a data storage area for storing data such as the results of the distance and angle measurements. In the program storage area, various types of computer programs may be stored. These computer programs can include a calculating program for calculating coordinates from the distance and angle measurements, image processing programs for performing image processing, a sequence program for selecting a point of interest in an image, for executing the distance measurement on the selected point of interest, a tracking program for tracking a reflector target, a search program for searching a reflector target when the target is missed out of sight, and other programs.

The image storage unit 55 may include a first image storage unit **55A**, a second image storage unit **55B**, and a third image storage unit **55C**. An image when the aiming light source 49 is turned on and an image when the aiming light source 49 is turned off may be acquired by the aiming camera 48 and by turning-on and turning-off operation of an electronic shutter in synchronization with the flashing of the aiming light source 49. The image data when the aiming light 50 is turned on can be stored in the first image storage unit 55A, and the image data when the aiming light 50 is turned off can be stored in the second image storage unit 55B. The image processing unit 53 subtracts the image data when the aiming light 50 is turned off as stored in the second image storage unit 55B from the image data when the aiming light 50 is turned on as stored in the first image storage unit 55A and acquires only the target image. The image data of the target image thus acquired is stored on the third image storage unit 55C.

The control device 41 comprises the display unit 56 for showing images captured by a camera. The display unit 56 may be an integral part of the measuring unit 15, but more preferably, the display unit 56 is included in the remote controller 17 that can be used for remote control of the total station 10. It is even conceivable that the total station 10 is fully remote controlled, wherein the display unit 56 may be in the form of a computer screen far away, and wherein information to and from the total station 10 are transferred over a wireless network. The display unit 56 may include a screen, a touch screen, etc.

The control device 41 comprises the input unit 57 that may be an integral part of the measuring unit 15, but more preferably, the input unit 57 is included in the remote controller 17 that can be used for remote control of the total station 10. The input unit 57 may include various input elements, such as a mouse, a keyboard, a touchscreen, etc.

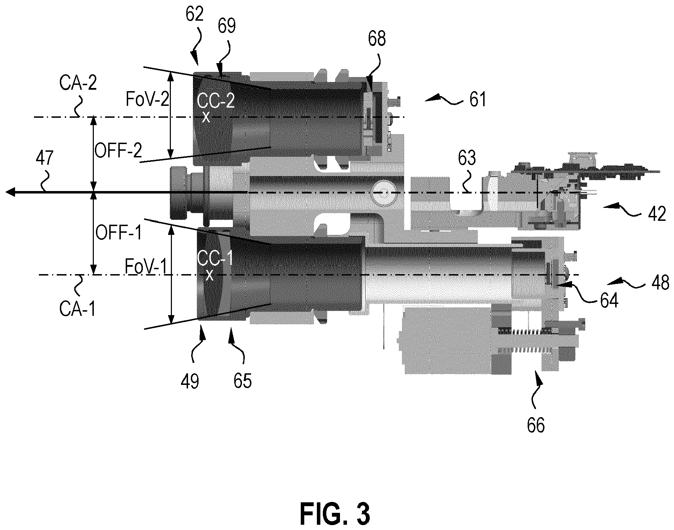

**FIG. 3** shows the optical components of the measuring head 23 in an exemplary version. The measuring head 23 includes the distance measuring device 42, the aiming camera 48, and the aiming light source 49. The aiming light source 49 is an optional component that is used to produce the necessary illumination for the aiming camera 48 in all ambient lighting conditions, even in darkness.

The measuring head 23 can further include a second camera **61** and a second light source **62**. The second camera 61 can be a tracking camera that is working in the infrared spectrum, or the second camera 61 can be an overview camera that is working in the visible spectrum. The wavelength of the second light source 62 should fit to the second camera 61.

The distance measuring device 42 emits the distance measuring beam 47 defining a targeting axis **63**. The aiming camera 48 includes a first image sensor **64** and a first optical lens **65**. The aiming camera 48 has a first field of view **FoV-1**, a first camera axis **CA-1**, and a first camera center **CC-1**. The first camera axis CA-1 is arranged with a first offset **OFF-1** to the targeting axis 63. In the exemplary version, the focal length of the aiming camera 48 is adaptable within a range between a minimum focal length and a maximum focal length by means of a motor unit **66**. Typical image sensors used for aiming cameras are monochrome or RGB-Bayer-filter CMOS sensors with small pixels and global shutter. The focus of the second camera 61 can be changed by using a controllable liquid optical lens, by moving the lens block, and/or by moving the image sensor.

The optionally second camera 61 may include a second image sensor **68** and a second optical lens **69**. In the exemplary version, the focal length of the second camera 61 is fixed. The second camera 61 can have a second field of view **FoV-2**, a second camera axis **CA-2**, and a second camera center **CC-2**. The second camera axis CA-2 is arranged with a second offset **OFF-2** to the targeting axis 63.

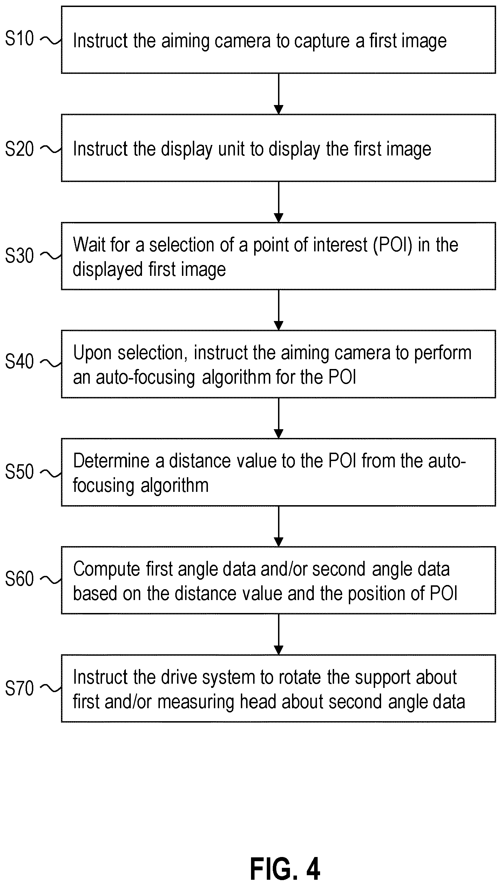

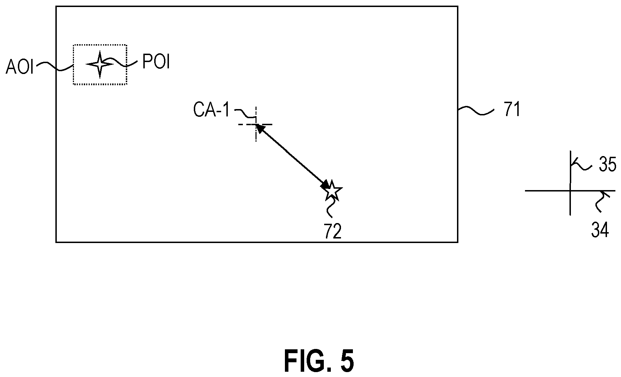

**FIG. 4** shows a method for aiming a surveying instrument to a point of interest according to the present invention in a flow chart, and **FIG. 5** shows schematically an image captured by the aiming camera 48 and used in the method according to the present invention. The method is performed by the computer system 51, 53, 54 and comprises the following steps:
▪ Instructing the aiming camera 48 to capture a first image **71** of the worksite 11 (step **S10**),
▪ Instructing the display unit 56 to display the first image 71 (step **S20**),
▪ Waiting for a selection of the point of interest POI in the first image 71 (step **S30**),
▪ Upon selection of the point of interest POI, instructing the aiming camera 48 to perform an auto-focusing algorithm (step **S40**), preferably for an area of interest **AOI** including the point of interest POI,
▪ Determining a distance value from the auto-focusing algorithm (step **S50**),
▪ Computing first angle data α₁ in the first plane 34 and/or second angle data α₂ in the second plane 35 based on the determined distance value and on the position of the point of interest POI on the image sensor 64 of the aiming camera 48 (step **S60**), and
▪ Instructing the drive system 44, 46 to rotate the support 22 about the first angle data α₁ and/or the measuring head 23 about the second angle data α₂ (step **S70**).

FIG. 5 shows the first image 71 that is captured by the aiming camera 48 and shown on the display unit 56 (step S20). Due to the eccentricity of the aiming camera 48 to the distance measuring device 42, a crosshair **72** of the aiming camera 48 that represents the first camera axis CA-1 does not coincide with a laser spot **73** that is generated by the distance measuring beam 47. To continue the method an interaction of the operator is necessary. Upon selection of the point of interest POI, the aiming camera 48 is instructed to perform an auto-focusing algorithm, preferably for an area of interest AOI including the point of interest POI (step S40) and the distance value is determined from the auto-focusing algorithm (step S50).

To consider the eccentricity, the computer system computes the first angle data α₁ in the first plane 34 and/or the second angle data α₂ in the second plane 35 based on the determined distance value and on the position of the point of interest POI on the image sensor 64 of the aiming camera 48 (step S60). In order to compensate the first and/or second angle data, the azimuth motor device 44 is instructed to rotate the support 22 about the first angle data α₁ and/or the elevation motor device 46 is instructed to rotate the measuring head 23 about the second angle data α₂ (step S70).

## Claims

1. A computer-implemented method for aiming a surveying instrument (10) to a point of interest (POI) in a worksite (11), in which the surveying instrument (10) is deployed, the surveying instrument (10) comprising a base (21), a support (22) being rotatable with respect to the base (21) about a first axis of rotation (31), a measuring head (23) being rotatable with respect to the support (22) about a second axis of rotation (32), a drive system (44, 46) configured to rotate the support (22) about the first axis of rotation (31) and/or the measuring head (23) about the second axis of rotation (32), a first angle encoder (42) configured to determine a first angle in a first plane (34) with respect to a rotation of the support (22) about the first axis of rotation (31), a second angle encoder (45) configured to determine a second angle in a second plane (35) with respect to a rotation of the measuring head (23) about the second axis of rotation (32), a computer system (51, 53, 54) having evaluation, data processing and/or control functionality, and a display unit (56) configured to show an image captured by a camera, wherein the measuring head (23) includes a distance measuring device (42) configured to emit a distance measuring beam (47) defining a targeting axis (63) and an aiming camera (48) having a first field of view (FoV-1), a first camera axis (CA-1) arranged with a first offset (OFF-1) to the targeting axis (63), and a first camera center (CC-1), wherein the method for aiming is performed by the computer system (51, 53, 54) and comprises:
▪ Instructing the aiming camera (48) to capture a first image (71) of the worksite (11),
▪ Instructing the display unit (56) to display the first image (71),
▪ Waiting for a selection of the point of interest (POI) in the first image,
▪ Upon selection of the point of interest (POI), instructing the aiming camera (48) to perform an auto-focusing algorithm, preferably for an area of interest (AOI) including the point of interest (POI),
▪ Determining a distance value from the auto-focusing algorithm,
▪ Computing first angle data (α₁) in the first plane (34) and/or second angle data (α₂) in the second plane (35) based on the determined distance value and on the position of the point of interest (POI) on an image sensor (64) of the aiming camera (48), and
▪ Instructing the drive system (44, 46) to rotate the support (22) about the first angle data (α₁) and/or the measuring head (23) about the second angle data (α₂).

2. The method of claim 1, wherein upon rotating the support (22) about the first angle data (α₁) and/or the measuring head (23) about the second angle data (α₂), the distance measuring device (42) is instructed by the computer system to measure an updated distance value.

3. The method of any one of claims 1 to 2, wherein the first camera axis (CA-1) is arranged parallel to the targeting axis (63).

4. The method of any one of claims 1 to 2, wherein the first camera axis (CA-1) is inclined to the targeting axis (63) at a first inclination angle (φ₁) different from 0°, and the first offset (OFF-1) is defined as normal spacing of the targeting axis (63) running through the first camera center (CC-1).

5. The method of any one of claims 1 to 4, wherein the measuring head (23) further comprises an aiming light source (49) configured to emit aiming light (50).

6. The method of any one of claims 1 to 5, wherein the measuring head (23) further includes a second camera (61) having a second field of view (FoV-2), a second camera axis (CA-2) arranged with a second offset (OFF-2) to the targeting axis (63), and a second camera center (CC-2).

7. The method of claim 6, wherein measuring head (23) further includes a second light source (62) configured to emit second light.

8. A computer program comprising instructions, which, when executed by a computer device (51, 53, 54), cause the computer system (51, 53, 54) to carry out the method according to any one of claims 1 to 7.

9. An apparatus comprising means for carrying out the method according to any one of claims 1 to 7.
